# EUROPEAN PATENT SPECIFICATION

(11) **EP 4 030 323 B1**
(45) Date of publication and mention of the grant of the patent: **04.06.2025**
(21) Application number: 21152084.6
(22) Date of filing: 18.01.2021
(51) Int. Cl.: G06F 21/44, H04L 9/40, H04L 9/32

(54) **METHOD FOR REALIZING AN ACCESS MANAGEMENT OF A PLURALITY OF COMPUTING DEVICES OR FUNCTIONALITIES OR SOFTWARE APPLICATIONS EXECUTED THEREON, SYSTEM, COMPUTING DEVICE OR FUNCTIONALITY OR SOFTWARE APPLICATION EXECUTED THEREON, ACCESS MANAGEMENT ENTITY, PROGRAM AND COMPUTER-READABLE MEDIUM**
VERFAHREN ZUR REALISIERUNG EINER ZUGRIFFSVERWALTUNG EINER VIELZAHL VON RECHNERVORRICHTUNGEN ODER FUNKTIONALITÄTEN ODER DARAUF AUSGEFÜHRTEN SOFTWAREANWENDUNGEN, SYSTEM, RECHNERVORRICHTUNG ODER FUNKTIONALITÄT ODER DARAUF AUSGEFÜHRTE SOFTWAREANWENDUNG, ZUGRIFFSVERWALTUNGSEINHEIT, PROGRAMM UND COMPUTERLESBARES MEDIUM
PROCÉDÉ POUR RÉALISER UNE GESTION D'ACCÈS D'UNE PLURALITÉ DE DISPOSITIFS INFORMATIQUES OU DE FONCTIONNALITÉS OU D'APPLICATIONS LOGICIELLES EXÉCUTÉES SUR CEUX-CI, SYSTÈME, DISPOSITIF INFORMATIQUE OU FONCTIONNALITÉ OU APPLICATION LOGICIELLE EXÉCUTÉE SUR CELUI-CI, ENTITÉ DE GESTION D'ACCÈS, PROGRAMME ET SUPPORT LISIBLE PAR ORDINATEUR

(43) Date of publication of application: 20.07.2022
(73) Proprietor: Deutsche Telekom AG, 53113 Bonn (DE)
(72) Inventor: ROLLIN, Hannes, 19055 Schwerin (DE); MITEV, Martin, 53113 Bonn (DE)
(74) Representative: Schwöbel, Thilo K.

(56) References cited:
- US-A1- 2007 288 743
- US-A1- 2010 191 970

## Description

### BACKGROUND

The present invention relates to a method for realizing an access management of a plurality of computing devices or functionalities or software applications executed thereon, related to data of a plurality of persons, by means of an access management entity especially serving a plurality of groups of persons.

Furthermore, the present invention relates to a system for realizing an access management of a plurality of computing devices or functionalities or software applications executed thereon, related to data of a plurality of persons, by means of an access management entity especially serving a plurality of groups of persons, the system especially comprising the plurality of computing devices or functionalities or software applications executed thereon and the access management entity.

Additionally, the present invention relates to an access management entity for realizing an access management of a plurality of computing devices or functionalities or software applications executed thereon, related to data of a plurality of persons, the access management entity especially serving a plurality of groups of persons
Furthermore, the present invention relates to a program and to a computer-readable medium for realizing an access management of a plurality of computing devices or functionalities or software applications executed thereon according to the inventive method.

It is conventionally known to realize contact detection and/or contact tracing for a plurality of persons by means of using wearable or portable devices, especially so-called ultra-wideband wearable or portable devices, or ultra-wideband tags. Such wearable or portable devices typically store log data related to the contact situation of the respective or considered wearable or portable device with other wearable or portable devices being or having been in proximity. Such log data typically comprise information about possibly risky encounters between at least two persons. In order to provide access to systems managing such sensitive data or health data or in order to provide access to other systems, a pseudonymous yet authenticated access is required.

US 2007/288743 A1 discloses a server which encrypts a client's state information including the client's authentication credentials using a local key that is not known to the client. The encrypted client state information is provided to the client. Later, the client sends this encrypted client state information back to the server. The server decrypts the client state information using the local key and uses it for access control purposes.

US 2010/191970 is a similar teaching, where a Protected Access Credential (PAC) is used, whereby a protected part of the credential is encrypted with a server-held symmetric key.

### SUMMARY

An object of the present invention is to provide a technically simple, effective and cost-effective solution for realizing an access management of a plurality of computing devices or functionalities or software applications executed thereon, related to data of a plurality of persons, by means of an access management entity especially serving a plurality of groups of persons. A further object of the present invention is to provide a corresponding system, a corresponding access management entity, and a corresponding program and computer-readable medium.

The object of the present invention is achieved by a method for realizing an access management of a plurality of computing devices or functionalities or software applications executed thereon, according to claim 1.

It is thereby advantageously possible according to the present invention to effectively and comparatively easily provide strong pseudonymity regarding the computing devices or functionalities or its software applications (or regarding the users) of the access management entity: Based on (the encrypted form of) the virtual device identifier being provided by the computing devices or functionalities or its software applications, the access management entity does not know the identity of the users (i.e. which one of the users it is) but only that the respective user (requesting the corresponding authentication, authorization, access, and/or group association) is actually authorized (or authenticated) to do so.

According to the present invention, this is especially advantageous with regard to systems relying on contact detecting and/or tracing tags or wearable or portable devices, and especially with a decentralized risk calculation on a computing device, often or typically the users' smartphones. Typically, each wearable or portable device or tag has a unique ID, or tag identifier which is broadcast and saved by other wearable or portable devices or tags in the vicinity. The sum or combination of these measurements gives rise to logs (or log data), which are transported to computing devices or functionalities, often the user's smart phones or other personal digital assistants, or part of the wearable or portable devices; there, log data must be processed (especially to detect risk encounters) and relevant risk-related information, including diagnosis information, shared with (or transmitted to) other parts of the system.

According to the present invention, a certain number of persons is considered. This could relate, e.g., to the general population of a certain region, e.g., a nation state or a part thereof such as a region or federal state; however, there could also be different groups of persons, such as, especially, the staff of an enterprise or of an organization or the like, where group association to one of such groups might be relevant.

The inventive system, method and components rely on realizing an access management of a plurality of computing devices or functionalities or software applications executed thereon. Typically, such computing device or functionality correspond to the user's smart phones or other personal computing devices or functionalities, wherein, typically, a software application is used to communicate with the system or access management entity. The identity of the user's instance interacting with the access management entity is typically linked with either an identifier information of the computing device or functionality (e.g. a smart phone's device identity or other identifier), or with an identifier information of the used software application executed on the computing device or functionality.

Typically, according to the present invention, the access management needs to be done with respect to (personal and/or sensitive) data (also called keys) of the plurality of persons. In this respect, regarding the plurality of computing devices or functionalities or software applications executed thereon, virtual device identifiers are used according to the present invention. A (specific) virtual device identifier is related to a (specific) computing device or functionality (or its software application), and only the access management entity generates (but preferably does not permanently store) the cleartext of the virtual device identifiers and is able to verify the virtual device identifiers as the communication of virtual device identifiers outside of the access management entity is encrypted (typically using public key infrastructure, i.e. typically relying on using a key pair comprising a private key and a corresponding public key).

The inventive method requires (regarding a specific computing device or functionality or its software application) at least a preliminary (or initiating) step: the access management entity generating the specific virtual device identifier, encrypting the virtual device identifier using the public key to obtain an encrypted virtual device identifier, and transmitting the encrypted virtual device identifier to the computing device or functionality or its software application.

Later on the computing device or functionality or its software application is able to request, from the access management entity, at least one of an authentication, an authorization, an access, and a group association, by means of the computing device or functionality or its software application transmitting the encrypted virtual device identifier to the access management entity and the access management entity either granting (or not granting) this request based on the (cleartext) content of the virtual device identifier, obtained by means of decrypting, using the private key of the access management entity, the encrypted virtual device identifier received from the computing device or functionality or its software application.

According to the present invention, it is advantageously possible and preferred that, prior or during the first step, either the access management entity or a further service entity generates a transaction token, wherein the transaction token is provided or transmitted to the computing device or functionality or its software application, wherein, during the first step, the computing device or functionality or its software application transmits the transaction token to the access management entity prior to receiving the encrypted virtual device identifier.

Thereby, it is advantageously possible to complete or to prepare the initializing step by means of the computing device or functionality or its software application receiving the transaction token (from especially the further service entity), and transmitting the transaction key to the access management entity, thereby triggering to complete the first (or initializing) step of the inventive method.

According to the present invention, it is furthermore advantageously possible and preferred that the transaction token is especially a transaction number, provided or transmitted to the computing device or functionality or its software application by means of an optically readable code, especially a QR-code.

According to the present invention, it is furthermore advantageously possible and preferred that, in the first step, the encryption of the virtual device identifier is performed, especially in case that the length of the virtual device identifier exceeds 32 bytes, by means of using hybrid encryption, especially using AES-256, advanced encryption standard 256, and especially by means of generating a random auxiliary key, encrypting the virtual device identifier using the random auxiliary key as a first component of the encrypted virtual device identifier, and encrypting the random auxiliary key using the public key to obtain a second component of the encrypted virtual device identifier, wherein especially the private key and the public key are related or correspond to the server certificate of the access management entity.

Thereby, it is advantageously possible to also use longer virtual device identifiers, i.e. virtual device identifiers comprising more information or a higher degree of uniqueness and/or of pseudonymization.

According to the present invention, it is advantageously furthermore possible and preferred that the access management entity alone is able to decrypt the encrypted virtual device identifiers,
wherein especially a part of the plurality of virtual device identifiers are or are able to be blacklisted by the access management entity, and/or
wherein the access management entity only stores blacklisted virtual device identifiers, and especially does not need to (permanently) store the virtual device identifiers, neither their cleartext nor their cyphertext.

By means of the access management entity alone being able to decrypt the encrypted virtual device identifiers, it is advantageously possible to enhance the level of security and/or data protection as virtual device identifiers are not able to be compared or analyzed by other instances. By means of blacklisting some virtual device identifiers, it is advantageously possible to revoke their validity; in order to achieve this blacklisting, it might be suitable to store the corresponding virtual device identifiers either in encrypted form or the cleartext thereof, thereby advantageously being able to quickly determine blocked or blacklisted virtual device identifiers.

According to the present invention, it is furthermore advantageously possible and preferred that the virtual device identifiers comprise at least one out of the following:
-- a group identifying part,
-- a user identification part, especially a random number,
-- a validity start date part,
-- a validity end date part expiry date part,
-- a person's country indicating part,
-- a user role indicating part,
-- a checksum part.

It is thereby advantageously possible to add further information or pieces of information to the virtual device identifier. However, to add further information, especially information being aimed or resulting in subdividing different groups among the plurality of persons, relating to one tenant or organization might result in reducing the resulting level of pseudonymity achievable. Furthermore, the expiry date or validity date might lead to a reduction of pseudonymity, especially in case that a uniformly applied validity time is used from the time of generating either the transaction token or the virtual device identifier as it is then possible to know one or the other of the points in time. Hence, it is preferred according to the present invention that a randomly defined expiry date and/or a randomly defined validity time is used, e.g. a randomly distributed validity period between a minimum time of, e.g., 2 months, and a maximum time of, e.g., 3 months.

According to a further preferred embodiment of the present invention, the virtual device identifiers used have the same format or structure irrespective of which specific group of the groups of persons is concerned, wherein especially the groups of persons are separated or disjunct groups of persons, the groups especially referring to different tenants of the access management entity such as to provide a multi-tenant access management,
wherein especially by means of using the virtual device identifiers the computing devices or functionalities or software applications executed thereon are able to be identified pseudonymously.

According to the present invention, it is advantageously furthermore possible and preferred that the access management of the plurality of computing devices or functionalities or software applications executed thereon is related to sensitive data, especially health data, of the plurality of persons, especially to provide contact tracing based on detecting relevant encounters between two persons of the plurality of persons wearing or carrying a wearable or portable device.

Furthermore, the present invention relates to a system for realizing an access management of a plurality of computing devices or functionalities or software applications executed thereon, according to claim 8

Additionally, the present invention relates to a program comprising a computer readable program code according to claim 10.

Still additionally, the present invention relates to a computer-readable medium comprising instructions according to claim 11.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates a plurality of persons in a contact detection and/or contact tracing setting, wherein each of the plurality of persons is wearing or carrying a computing device or functionality of a plurality of computing device or functionality.
Figure 2 schematically illustrates the process to generate a virtual device identifier, and the related communication between a computing device or functionality and an access management entity.
Figure 3 schematically illustrates an example of a structure of a virtual device identifier.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

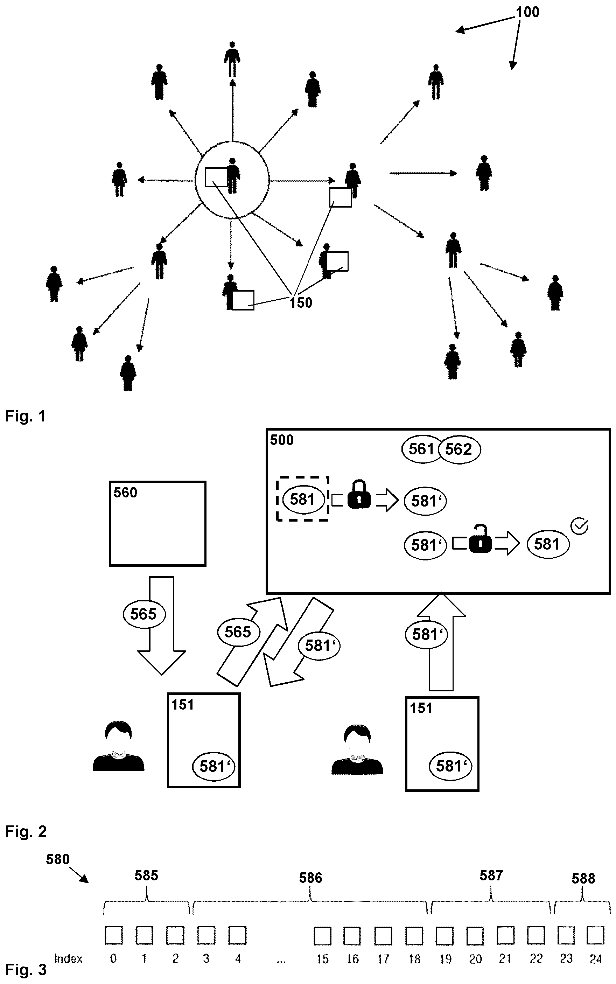

In Figure 1, a plurality of persons 100 in a contact detection and/or contact tracing setting are schematically represented, wherein typically each of the plurality of persons 100 is wearing or carrying a computing device or functionality of a plurality of computing device or functionalities 150, wherein for the sake of simplicity, Figure 1 only shows computing device or functionalities 150 for four persons 100 explicitly.

In Figure 2, the process to generate a virtual device identifier 581, and the related communication between a (specific) computing device or functionality 151 or software applications executed thereon and an access management entity 500 is schematically represented. Furthermore, a further service entity 560 is schematically shown being involved in that communication.

The further service entity 560 transmits a transaction token 565 to the computing device or functionality 151 or software applications executed thereon (i.e. the latter receives the transaction token 565). Typically, the transaction token 565 is generated by the further service entity 560 (especially a specifically authorized entity such as a human resources department within an enterprise or the like) but the transaction token 565 might also be generated somewhere else (i.e. outside of the further service entity 560), and be transmitted or provided to the further service entity 560, either on demand or block-wise or batch-wise. In an alternative embodiment (not specifically shown in Figure 2), the access management entity 500 is involved in either the generation of the transaction token 565 and/or in the transmission of the transaction token 565 to the computing device or functionality 151 or software applications executed thereon, such that, in a very specific embodiment, no further service entity 560 is involved in the communication but the computing device or functionality 151 or software application executed receives the transaction token 565 directly, or indirectly, from the access management entity 500 (or the access management entity 500 might be part of a system, such as a so-called enterprise protection systems, EPS, from which the further service entity 560 is a further part, especially as an EPS transaction number portal, EPS TAN). In any case, and in however manner the transaction token 565 (or transaction number 565) is generated or by which entity, the transaction token 565 is specific to (or with respect to) the specific computing device or functionality 151 or software application executed thereon by means of being associated or assigned to the computing device or functionality 151 or its software application (and thereby also to the respective user) by an instance that typically knows the user and/or the computing device or functionality 151 or its software application, i.e. with respect to this instance or entity assigning or associating (or, more generally, providing) the transaction token 565, the respective user and/or the corresponding computing device or functionality 151 or its software application is known, i.e. this user or device (or application) is in a sense either (non-pseudonymously) known or at least much less pseudonymous known compared to the degree of pseudonymity achievable by means of the virtual device identifier 581. Additionally, according to the present invention, i.e. according to a specifically preferred embodiment thereof, the access management entity 500 is used by a plurality of different tenants, such as, e.g., enterprises or organizations. Each one of these different tenants or enterprises or organizations are related to a plurality of persons, such a plurality of persons corresponding to a group of persons, i.e. the plurality of persons 100 is typically split up (or could be split up) in different groups of persons, each group typically having a plurality of persons, and each such group (and, accordingly, the corresponding persons) being typically related to another one of the different tenants or enterprises or organizations that use the access management entity 500.

As the access management entity 500 (and moreover also the enterprise protection systems, of which it is typically a part) is normally involved in handling sensitive data (related to sensitive or personal information of the persons concerned, i.e. the users of the respective computing device or functionality 151 or applications thereof) there is often a need for the access management entity 500 to be able to differentiate or distinguish the different groups of persons (or the different tenants or organizations or enterprises). Hence, the access management entity 500 needs to know 'something' regarding the user or computing device or functionality 151 or application thereof (i.e. especially that this person, device or application belongs to (or is related to) a specific tenant or enterprise or organization (especially by means of a group identifier or the like); other such information could relate to the user's role (e.g. with respect to different access levels or privileges or the like)) but otherwise the access management entity 500 preferably knows nothing about that user (or person, device or application), or at least not much (that would enable the access management entity 500 to identify the respective user), i.e. that user is anonymous to the access management entity 500 besides being known, especially, to belong to a specific one or a certain number of groups of persons (i.e. the tenants of the access management entity 500).

Once, the transaction token 565 has been transmitted (in whichever manner, and represented by the most left hand, downward pointing arrow in Figure 2) to the computing device or functionality 151 or application thereof, according to the present invention, the computing device or functionality 151 or software application executed thereon is able to transmit the transaction token 565 to the access management entity 500; this is represented, in Figure 2, by means of an upwards pointing arrow associated with reference sign 565. After the reception, at the access management entity 500, of the transaction token 565, the access management entity 500 is able to generate - based on the transaction token 565, and especially based on an information (e.g. indicative of the group of persons or tenant) being transported by or with the transaction token 565 - the virtual device identifier 581 (i.e. the cleartext thereof) is generated by the access management entity 500, encrypted (using the public key of a key pair of the access management entity 500; the encryption operation (cf. the closed-lock symbol) being schematically represented in the box of the access management entity 500 showing the generated virtual device identifier 581 in a dashed box and being encrypted resulting in the encrypted virtual device identifier 581') and transmitted as the encrypted virtual device identifier 581' (i.e. the cyphertext of this encryption operation) to the computing device or functionality 151 or its software application. This corresponds to the first step according to the method of the present invention. The result thereof is represented, in Figure 2, by means of the representation of the computing device or functionality 151 or its software application on the left-hand side of the Figure, comprising the encrypted virtual device identifier 581'.

In this situation (and especially at a (much) later point in time (but during the validity time interval of the virtual device identifier 581, if applicable) after the operations of the first step of the method according to the present invention), the user (i.e. the computing device or functionality 151 or its software application) is able to be granted an access from the access management entity 500 based the corresponding request and (in terms of authentication) solely based on providing (i.e. transmitting) the encrypted virtual device identifier 581' to the access management entity 500. This is represented, in Figure 2, by means of the representation of the computing device or functionality 151 or its software application on the right hand side of the Figure, comprising the encrypted virtual device identifier 581': The computing device or functionality 151 or its software application transmits the encrypted virtual device identifier 581' to the access management entity 500 and the access management entity 500 decrypts the encrypted virtual device identifier 581' obtaining (using the private key 561) the cleartext of the virtual device identifier 581 (the decryption operation being schematically represented in the box of the access management entity 500 showing the encrypted virtual device identifier 581' being decrypted (open-lock symbol) resulting in the encrypted virtual device identifier 581'), and thus being able to check whether the user's request shall be granted. Hence, the second step according to the method of the present invention is conducted: Upon the computing device or functionality 151 or its software application requesting, from the access management entity 500, the at least one of authentication, authorization, access, and group association, the computing device or functionality 151 or its software application transmits the encrypted virtual device identifier 581' to the access management entity 500 and the access management entity 500 grants this request based on the content of the virtual device identifier 581, obtained by means of decrypting, using the private key 561, the encrypted virtual device identifier 581' received from the computing device or functionality 151 or its software application.

In Figure 3, an example of a structure of virtual device identifiers 580 is schematically shown. According to such an exemplary structure, or information content, of the virtual device identifiers 580, a specific virtual device identifier (of the plurality of virtual device identifiers 580) comprises a tenant identifier 585 (of, e.g., three bytes), a user identifier, especially a universally unique identifier 586, UUID, (of, e.g., 16 bytes), an expiry information 587 (of, e.g., four bytes), and a checksum 588 (of, e.g., two bytes). According to different embodiment of the present invention, the virtual device identifiers 580 comprises at least one out of the following:
-- a group identifying part (e.g. corresponding to the tenant identifier 585),
-- a user identification part, especially a random number, (e.g. corresponding to the universally unique identifier 586)
-- a validity start date part,
-- a validity end date part expiry date part (e.g. corresponding to the expiry information 587),
-- a person's country indicating part,
-- a user role indicating part,
-- a checksum part (e.g. corresponding to the checksum 588).

Hence, according to the present invention, it is advantageously possible to apply the inventive concept to provide an enterprise protection system, EPS, with a possibility to provide for key downloads or key uploads (i.e. the processing and handling of potentially sensitive and very personal user-related information such as health information and/or diagnosis-related information, especially diagnostic status of CoV2-related infections) in a tenant-specific manner (i.e. in relation to different groups of user separated), so that keys (or other sensitive pieces of information, or the information about the presence or the absence of an information) from, e.g., an employee of tenant X are exclusively distributed among users of tenant X. Overall, the enterprise protection system is supposed to combine high-precision contact tracing, especially using ultra-wideband (UWB) wearables called "tags", and decentralized calculation of Covid-19 exposure risk(s), especially on the users' smartphones (as computing device or functionality). According to the present invention, it is advantageously possible to ensure that only authorized users have access to the system (i.e. the requested at least one of authentication, authorization, access, and group association by the computing device or functionality 151 or its software application needs to be granted only in case of a corresponding authorization or authentication of the respective user; however, a very high degree of anonymity (or pseudonymity) shall be realized such that the use of a regular IAM system (identity & access management system) which typically exposes (or links) user identities together with sensitive health data (or, at least, based on the structure of such systems, such a link or exposure is not able to be outright excluded, or demonstrated to be excluded). In such a situation, the present invention provides for a decentralized, pseudonymous, and multi-tenant access management (functionality). Especially, according to the present invention provides strong pseudonymity to be applied regarding the users (or the computing devices or functionalities 150 or its software applications) of the access management entity 500: Based on the virtual device identifier 581 (or, rather, the encrypted form 581' thereof being provided by the user), the backend (or access management entity 500) does not know the identity of the user (i.e. which one of the users it is) but only that the user requesting the corresponding authentication, authorization, access, and/or group association is actually authorized (or authenticated) to do so.

According to the present invention, e.g. the tenant's human resources department (HR) has access to the transaction number portal (TAN portal) or transaction token portal of the EPS in order to generate transaction number (TANs) or transaction tokens 565. These TANs or transaction tokens also prove affiliation with the company (or the tenant). In other words, possession of a TAN authorizes a user as belonging to a particular tenant. Naturally, the process is as safe as the TAN provisioning process. The information of belonging to a particular tenant (providing the possibility of a branding) is authorized by each app user getting a TAN from their HR. This TAN is input (e.g. entered or scanned (if given, e.g., as a QR code or the like)) in the app and uploaded to the EPS backend, i.e. the access management entity 500. Then, the backend creates the corresponding virtual device identifier (VDID) and uses the public key of, e.g., its server certificate (e.g., 4096-bit RSA) to encrypt the VDID. If the VDID length exceeds 32 bytes, hybrid encryption is used (the VDID is especially encrypted using AES-256 and a random key; the latter is then encrypted with the public key). Especially, the virtual device identifier or VDID is not stored in the backend (i.e. the access management entity 500) and not connected to the civil identity of the user. Pseudonymization of the VDID is rather strong. Later, the app (i.e. the computing device or functionality 151 or its software application) submits this very VDID whenever access authorization or tenant association are necessary (with respect to the access management entity 500 or backend). The backend alone, using its public key, can decode the VDID and check the information contained in the virtual device identifier (such as, e.g., tenant ID, expiration date, and checksum). Especially, VDIDs are able to be monitored and potentially blacklisted if abuse is detected (e.g., denial of service, DoS, attacks or the use of the same VDID from different IP addresses in short order). Regular users who have been falsely blacklisted can easily re-brand, or re-activate, their app by resetting (or reinstalling) it and requesting a TAN from their HR; a successfully validated VDID is regularly replaced by a newly issued one to prevent expiry.

The anatomy of a (decrypted) virtual device identifier or VDID is as follows: the tenant ID (or tenant identifier 585) is especially a unique identifier of a specific tenant, the universally unique identifier 586 (or UUID) is a regular, especially 128-bit (or 256-bit), random number ensuring (a sufficient level of) uniqueness of the VDID, the expiry information 587 (being optional) is especially the 4-bytes representation of a Unix timestamp, and the checksum 588 (also being optional) especially consists of the first two (or more, if needed) bytes of, e.g., the SHA-256 of the other bytes. However, additional pieces of information such as, e.g., regarding the country of the user or the user role is able to be put in the VDID.

## Claims

1. Method for realizing an access management of a plurality of computing devices or functionalities (150) or software applications executed thereon, by means of an access management entity (500) especially serving a plurality of groups of persons, wherein the access management of the plurality of computing devices or functionalities (150) or software applications executed thereon is related to health data of a plurality of persons (100), each of which is wearing or carrying a computing device or functionality of the plurality of computing devices or functionalities, to provide contact tracing based on detecting relevant encounters between two persons of the plurality of persons (100),
wherein, regarding the plurality of computing devices or functionalities (150) or software applications executed thereon, virtual device identifiers (580) are used,
wherein a virtual device identifier (581) is related to a computing device or functionality (151) or its software application, wherein the access management entity (500) is provided with the private key (561) of a key pair comprising the private key (561) and a corresponding public key (562),
wherein the method comprises the following steps in order for the computing device or functionality (151) or its software application being at least one of authorized, authenticated, granted access, and group associated, by the access management entity (500):
-- in a first step, the access management entity (500) generates the virtual device identifier (581), encrypts it using the public key (562) to obtain an encrypted virtual device identifier (581'), and transmits the encrypted virtual device identifier (581') to the computing device or functionality (151) or its software application,
-- in a second step, upon the computing device or functionality (151) or its software application requesting, from the access management entity (500), the at least one of authentication, authorization, access, and group association, the computing device or functionality (151) or its software application transmits the encrypted virtual device identifier (581') to the access management entity (500) and the access management entity (500) grants this request based on the content of the virtual device identifier (581), obtained by means of decrypting, using the private key (561), the encrypted virtual device identifier (581') received from the computing device or functionality (151) or its software application.

2. Method according to claim 1, wherein, prior or during the first step, either the access management entity (500) or a further service entity (560) generates a transaction token (565), wherein the transaction token (565) is provided or transmitted to the computing device or functionality (151) or its software application, wherein, during the first step, the computing device or functionality (151) or its software application transmits the transaction token (565) to the access management entity (500) prior to receiving the encrypted virtual device identifier (581').

3. Method according to one of the preceding claims, wherein the transaction token (565) is especially a transaction number, provided or transmitted to the computing device or functionality (151) or its software application by means of an optically readable code, especially a QR-code.

4. Method according to one of the preceding claims, wherein, in the first step, the encryption of the virtual device identifier (581) is performed, especially in case that the length of the virtual device identifier (581) exceeds 32 bytes, by means of using hybrid encryption, especially using AES-256, advanced encryption standard 256, and especially by means of generating a random auxiliary key, encrypting the virtual device identifier (581) using the random auxiliary key as a first component of the encrypted virtual device identifier (581'), and encrypting the random auxiliary key using the public key (562) to obtain a second component of the encrypted virtual device identifier (581'),
wherein especially the private key (561) and the public key (562) are related or correspond to the server certificate of the access management entity (500).

5. Method according to one of the preceding claims, wherein the access management entity (500) alone is able to decrypt the encrypted virtual device identifiers (580), wherein especially a part of the plurality of virtual device identifiers (580) are or are able to be blacklisted by the access management entity (500), and/or wherein the access management entity (500) only stores blacklisted virtual device identifiers, and especially does not need to store the virtual device identifiers, neither their cleartext nor their cyphertext.

6. Method according to one of the preceding claims, wherein the virtual device identifiers (580) comprise at least one out of the following:
-- a group identifying part,
-- a random number,
-- a validity start date part,
-- a validity end date part expiry date part,
-- a person's country indicating part,
-- a user role indicating part,
-- a checksum part.

7. Method according to one of the preceding claims, wherein the virtual device identifiers (580) used have the same format or structure irrespective of which specific group of the groups of persons is concerned, wherein especially the groups of persons are separated or disjunct groups of persons, the groups especially referring to different tenants of the access management entity (500) such as to provide a multi-tenant access management,
wherein especially by means of using the virtual device identifiers (580) the computing devices or functionalities (150) or software applications executed thereon are able to be identified pseudonymously.

8. System for realizing an access management of a plurality of computing devices or functionalities (150) or software applications executed thereon, by means of an access management entity (500) especially serving a plurality of groups of persons, wherein the access management of the plurality of computing devices or functionalities (150) or software applications executed thereon is related to health data of a plurality of persons (100), each of which is wearing or carrying a computing device or functionality of the plurality of computing devices or functionalities, to provide contact tracing based on detecting relevant encounters between two persons of the plurality of persons (100),
the system comprising the plurality of computing devices or functionalities (150) or software applications executed thereon and the access management entity (500), wherein, regarding the plurality of computing devices or functionalities (150) or software applications executed thereon, virtual device identifiers (580) are used, wherein a virtual device identifier (581) is related to a computing device or functionality (151) or its software application, wherein the access management entity (500) is provided with the private key (561) of a key pair comprising the private key (561) and a corresponding public key (562),
wherein the system is configured such that in order for the computing device or functionality (151) or its software application being at least one of authorized, authenticated, granted access, and group associated, by the access management entity (500):
-- the access management entity (500) generates the virtual device identifier (581), encrypts it using the public key (562) to obtain an encrypted virtual device identifier (581'), and transmits the encrypted virtual device identifier (581') to the computing device or functionality (151) or its software application,
-- upon the computing device or functionality (151) or its software application requesting, from the access management entity (500), the at least one of authentication, authorization, access, and group association, the computing device or functionality (151) or its software application transmits the encrypted virtual device identifier (581') to the access management entity (500) and the access management entity (500) grants this request based on the content of the virtual device identifier (581), obtained by means of decrypting, using the private key (561), the encrypted virtual device identifier (581') received from the computing device or functionality (151) or its software application.

9. Access management entity (500) for realizing an access management of a plurality of computing devices or functionalities (150) or software applications executed thereon, the access management entity (500) especially serving a plurality of groups of persons, wherein the access management of the plurality of computing devices or functionalities (150) or software applications executed thereon is related to health data of a plurality of persons (100), each of which is wearing or carrying a computing device or functionality of the plurality of computing devices or functionalities, to provide contact tracing based on detecting relevant encounters between two persons of the plurality of persons (100),
wherein, regarding the plurality of computing devices or functionalities (150) or software applications executed thereon, virtual device identifiers (580) are used,
wherein a virtual device identifier (581) is related to a computing device or functionality (151) or its software application, wherein the access management entity (500) is provided with the private key (561) of a key pair comprising the private key (561) and a corresponding public key (562),
wherein the access management entity (500) is configured such that in order for the computing device or functionality (151) or its software application being at least one of authorized, authenticated, granted access, and group associated, by the access management entity (500):
-- the access management entity (500) generates the virtual device identifier (581), encrypts it using the public key (562) to obtain an encrypted virtual device identifier (581'), and transmits the encrypted virtual device identifier (581') to the computing device or functionality (151) or its software application,
-- the access management entity (500) receives, from the computing device or functionality (151) or its software application, a request regarding the at least one of authentication, authorization, access, and group association, receives the encrypted virtual device identifier (581'), and the access management entity (500) grants this request based on the content of the virtual device identifier (581), obtained by means of decrypting, using the private key (561), the encrypted virtual device identifier (581') received from the computing device or functionality (151) or its software application.

10. Program comprising a computer readable program code, which, when executed in part on a computing device or functionality (151) and in part on an access management entity (500), causes the computing device or functionality (151) and the access management entity (500) to perform a method according one of claims 1 to 7.

11. Computer-readable medium comprising instructions which when executed in part on a computing device or functionality (151) and in part on an access management entity (500), causes the computing device or functionality (151) and the access management entity (500) to perform a method according one of claims 1 to 7.

## Patentansprüche

1. Verfahren zum Realisieren eines Zugriffsmanagements mehrerer Computervorrichtungen oder -funktionalitäten (150) oder darauf ausgeführter Software-Anwendungen mittels einer Zugriffsmanagement-Entität (500), die insbesondere mehrere Gruppen von Personen bedient, wobei das Zugriffsmanagement der mehreren Computervorrichtungen oder -funktionalitäten (150) oder darauf ausgeführten Software-Anwendungen mit Gesundheitsdaten mehrerer Personen (100) im Zusammenhang steht, von denen jede eine Computervorrichtung oder -funktionalität der mehreren Computervorrichtungen oder -funktionalitäten an sich trägt oder mit sich führt, um eine Kontaktverfolgung auf der Grundlage des Detektierens relevanter Begegnungen zwischen zwei Personen der mehreren Personen (100) bereitzustellen, wobei bezüglich der mehreren Computervorrichtungen oder -funktionalitäten (150) oder darauf ausgeführten Software-Anwendungen Identifikatoren (580) für virtuelle Vorrichtungen verwendet werden, wobei ein Identifikator (581) für eine virtuelle Vorrichtung mit einer Computervorrichtung oder -funktionalität (151) oder ihrer Software-Anwendung im Zusammenhang steht, wobei die Zugriffsmanagement-Entität (500) mit dem privaten Schlüssel (561) eines Schlüsselpaares versehen ist, das den privaten Schlüssel (561) und einen entsprechenden öffentlichen Schlüssel (562) umfasst,
wobei das Verfahren die folgenden Schritte umfasst, damit die Computervorrichtung oder -funktionalität (151) oder ihre Software-Anwendung durch die Zugriffsmanagement-Entität (500) mindestens eines von autorisiert, authentifiziert, zugriffsberechtigt und gruppenverknüpft wird:
- in einem ersten Schritt generiert die Zugriffsmanagement-Entität (500) den Identifikator (581) für eine virtuelle Vorrichtung, verschlüsselt ihn unter Verwendung des öffentlichen Schlüssels (562), um einen Identifikator (581') für eine virtuelle Vorrichtung zu erhalten, und sendet den verschlüsselten Identifikator (581') für eine virtuelle Vorrichtung an die Computervorrichtung oder -funktionalität (151) oder ihre Software-Anwendung,
- in einem zweiten Schritt, wenn die Computervorrichtung oder -funktionalität (151) oder ihre Software-Anwendung von der Zugriffsmanagement-Entität (500) das mindestens eine von einer Authentifizierung, Autorisierung, Zugriffsberechtigung und Gruppenverknüpfung anfordert, sendet die Computervorrichtung oder -funktionalität (151) oder ihre Software-Anwendung den verschlüsselten Identifikator (581') für eine virtuelle Vorrichtung an die Zugriffsmanagement-Entität (500), und die Zugriffsmanagement-Entität (500) gewährt diese Anforderung auf der Grundlage des Inhalts des Identifikators (581) für eine virtuelle Vorrichtung, der mittels Entschlüsselung, unter Verwendung des privaten Schlüssels (561), des von der Computervorrichtung oder -funktionalität (151) oder ihrer Software-Anwendung empfangenen verschlüsselten Identifikators (581') für eine virtuelle Vorrichtung erhalten wurde.

2. Verfahren nach Anspruch 1, wobei vor oder während dem ersten Schritt entweder die Zugriffsmanagements-Entität (500) oder eine weitere Dienst-Entität (560) ein Transaktions-Token (565) generiert, wobei das Transaktions-Token (565) an die Computervorrichtung oder -funktionalität (151) oder ihre Software-Anwendung bereitgestellt oder gesendet wird, wobei während des ersten Schrittes die Computervorrichtung oder -funktionalität (151) oder ihrer Software-Anwendung das Transaktions-Token (565) an die Zugriffsmanagements-Entität (500) sendet, bevor der verschlüsselte Identifikator (581') für eine virtuelle Vorrichtung empfangen wird.

3. Verfahren nach einem der vorangehenden Ansprüche, wobei das Transaktions-Token (565) insbesondere eine Transaktionsnummer ist, die mittels eines optisch lesbaren Codes, insbesondere eines QR-Codes, an die Computervorrichtung oder -funktionalität (151) oder ihre Software-Anwendung bereitgestellt oder gesendet wird.

4. Verfahren nach einem der vorangehenden Ansprüche, wobei, in dem ersten Schritt, die Verschlüsselung des Identifikators (581) für eine virtuelle Vorrichtung, insbesondere in dem Fall, dass die Länge des Identifikators (581) für eine virtuelle Vorrichtung 32 Bytes übersteigt, unter Verwendung von hybrider Verschlüsselung, insbesondere unter Verwendung von AES-256 (Advanced Encryption Standard 256), und insbesondere mittels Generieren eines zufälligen Hilfsschlüssels, Verschlüsseln des Identifikators (581) für eine virtuelle Vorrichtung unter Verwendung des zufälligen Hilfsschlüssels als eine erste Komponente des verschlüsselten Identifikators (581') für eine virtuelle Vorrichtung, und Verschlüsseln des zufälligen Hilfsschlüssels unter Verwendung des öffentlichen Schlüssels (562) durchgeführt wird, um eine zweite Komponente des verschlüsselten Identifikators (581') für eine virtuelle Vorrichtung zu erhalten,
wobei insbesondere der private Schlüssel (561) und der öffentliche Schlüssel (562) mit dem Serverzertifikat der Zugriffsmanagement-Entität (500) in Beziehung stehen oder diesem entsprechen.

5. Verfahren nach einem der vorangehenden Ansprüche, wobei allein die Zugriffsmanagements-Entität (500) in der Lage ist, die verschlüsselten Identifikatoren (580) für virtuelle Vorrichtungen zu entschlüsseln, wobei insbesondere ein Teil der mehreren Identifikatoren (580) für virtuelle Vorrichtungen durch die Zugriffsmanagements-Entität (500) auf eine schwarze Liste gesetzt wird oder gesetzt werden kann, und/oder
wobei die Zugriffsmanagement-Entität (500) lediglich auf die schwarzen Liste gesetzte Identifikatoren für virtuelle Vorrichtungen speichert und insbesondere keine Identifikatoren für virtuelle Vorrichtungen, weder ihren Klartext noch ihren Chiffretext, zu speichern braucht.

6. Verfahren nach einem der vorangehenden Ansprüche, wobei die Identifikatoren (580) für virtuelle Vorrichtungen mindestens eines von Folgendem umfassen:
- einen gruppenidentifizierenden Teil,
- eine Zufallszahl,
- einen Gültigkeitsbeginndatum-Teil,
- einen Gültigkeitsenddatum-Teil-Ablaufdatum-Teil,
- einen das Land einer Person angebenden Teil,
- einen eine Benutzerrolle angebenden Teil,
- einen Prüfsummenteil.

7. Verfahren nach einem der vorangehenden Ansprüche, wobei die verwendeten Identifikatoren (580) für virtuelle Vorrichtungen das gleiche Format oder die gleiche Struktur aufweisen, unabhängig davon, um welche spezifische Gruppe der Gruppen von Personen es sich handelt, wobei insbesondere die Gruppen von Personen getrennte oder disjunkte Gruppen von Personen sind, wobei sich die Gruppen insbesondere auf verschiedene Mieter der Zugriffsmanagement-Entität (500) beziehen, um ein Mehrmieter-Zugriffsmanagement bereitzustellen,
wobei insbesondere mittels Verwendung der Identifikatoren (580) für virtuelle Vorrichtungen die Computervorrichtungen oder -funktionalitäten (150) oder darauf ausgeführte Software-Anwendungen pseudonym identifiziert werden können.

8. System zum Realisieren eines Zugriffsmanagements mehrerer Computervorrichtungen oder -funktionalitäten (150) oder darauf ausgeführter Software-Anwendungen mittels einer Zugriffsmanagement-Entität (500), die insbesondere mehrere Gruppen von Personen bedient, wobei das Zugriffsmanagement der mehreren Computervorrichtungen oder -funktionalitäten (150) oder darauf ausgeführten Software-Anwendungen mit Gesundheitsdaten mehrerer Personen (100) im Zusammenhang steht, von denen jede eine Computervorrichtung oder -funktionalität der mehreren Computervorrichtungen oder -funktionalitäten an sich trägt oder mit sich führt, um eine Kontaktverfolgung auf der Grundlage des Detektierens relevanter Begegnungen zwischen zwei Personen der mehreren Personen (100) bereitzustellen,
wobei das System die mehreren Computervorrichtungen oder -funktionalitäten (150) oder darauf ausgeführten Software-Anwendungen und die Zugriffsmanagement-Entität (500) umfasst,
wobei bezüglich der mehreren Computervorrichtungen oder -funktionalitäten (150) oder darauf ausgeführten Software-Anwendungen Identifikatoren (580) für virtuelle Vorrichtungen verwendet werden, wobei ein Identifikator (581) für eine virtuelle Vorrichtung mit einer Computervorrichtung oder -funktionalität (151) oder ihrer Software-Anwendung im Zusammenhang steht, wobei die Zugriffsmanagement-Entität (500) mit dem privaten Schlüssel (561) eines Schlüsselpaares versehen ist, das den privaten Schlüssel (561) und einen entsprechenden öffentlichen Schlüssel (562) umfasst,
wobei das System so eingerichtet ist, dass, damit die Computervorrichtung oder -funktionalität (151) oder ihre Software-Anwendung durch die Zugriffsmanagement-Entität (500) mindestens eines von autorisiert, authentifiziert, zugriffsberechtigt und gruppenverknüpft wird:
- die Zugriffsmanagement-Entität (500) den Identifikator (581) für eine virtuelle Vorrichtung generiert, ihn unter Verwendung des öffentlichen Schlüssels (562) verschlüsselt, um einen Identifikator (581') für eine virtuelle Vorrichtung zu erhalten, und den verschlüsselten Identifikator (581') für eine virtuelle Vorrichtung an die Computervorrichtung oder -funktionalität (151) oder ihre Software-Anwendung sendet,
- wenn die Computervorrichtung oder -funktionalität (151) oder ihre Software-Anwendung von der Zugriffsmanagement-Entität (500) das mindestens eine von einer Authentifizierung, Autorisierung, Zugriffsberechtigung und Gruppenverknüpfung anfordert, die Computervorrichtung oder -funktionalität (151) oder ihre Software-Anwendung den verschlüsselten Identifikator (581') für eine virtuelle Vorrichtung an die Zugriffsmanagement-Entität (500) sendet, und die Zugriffsmanagement-Entität (500) diese Anforderung auf der Grundlage des Inhalts des Identifikators (581) für eine virtuelle Vorrichtung, der mittels Entschlüsselung, unter Verwendung des privaten Schlüssels (561), des von der Computervorrichtung oder -funktionalität (151) oder ihrer Software-Anwendung empfangenen verschlüsselten Identifikators (581') für eine virtuelle Vorrichtung erhalten wurde, gewährt.

9. Zugriffsmanagement-Entität (500) zum Realisieren eines Zugriffsmanagements mehrerer Computervorrichtungen oder -funktionalitäten (150) oder darauf ausgeführter Software-Anwendungen, wobei die Zugriffsmanagement-Entität (500) insbesondere mehrere Gruppen von Personen bedient, wobei das Zugriffsmanagement der mehreren Computervorrichtungen oder -funktionalitäten (150) oder darauf ausgeführten Software-Anwendungen mit Gesundheitsdaten mehrerer Personen (100) im Zusammenhang steht, von denen jede eine Computervorrichtung oder -funktionalität der mehreren Computervorrichtungen oder -funktionalitäten an sich trägt oder mit sich führt, um eine Kontaktverfolgung auf der Grundlage des Detektierens relevanter Begegnungen zwischen zwei Personen der mehreren Personen (100) bereitzustellen,
wobei bezüglich der mehreren Computervorrichtungen oder -funktionalitäten (150) oder darauf ausgeführten Software-Anwendungen Identifikatoren (580) für virtuelle Vorrichtungen verwendet werden, wobei ein Identifikator (581) für eine virtuelle Vorrichtung mit einer Computervorrichtung oder -funktionalität (151) oder ihrer Software-Anwendung im Zusammenhang steht, wobei die Zugriffsmanagement-Entität (500) mit dem privaten Schlüssel (561) eines Schlüsselpaares versehen ist, das den privaten Schlüssel (561) und einen entsprechenden öffentlichen Schlüssel (562) umfasst,
wobei die Zugriffsmanagement-Entität (500) so eingerichtet ist, dass, damit die Computervorrichtung oder -funktionalität (151) oder ihre Software-Anwendung durch die Zugriffsmanagement-Entität (500) mindestens eines von autorisiert, authentifiziert, zugriffsberechtigt und gruppenverknüpft wird:
- die Zugriffsmanagement-Entität (500) den Identifikator (581) für eine virtuelle Vorrichtung generiert, ihn unter Verwendung des öffentlichen Schlüssels (562) verschlüsselt, um einen Identifikator (581') für eine virtuelle Vorrichtung zu erhalten, und den verschlüsselten Identifikator (581') für eine virtuelle Vorrichtung an die Computervorrichtung oder -funktionalität (151) oder ihre Software-Anwendung sendet,
- die Zugriffsmanagement-Entität (500) von der Computervorrichtung oder -funktionalität (151) oder ihrer Software-Anwendung eine Anforderung bezüglich des mindestens einen von einer Authentifizierung, Autorisierung, Zugriffsberechtigung und Gruppenverknüpfung empfängt, den verschlüsselten Identifikator (581') für eine virtuelle Vorrichtung empfängt, und die Zugriffsmanagement-Entität (500) diese Anforderung auf der Grundlage des Inhalts des Identifikators (581) für eine virtuelle Vorrichtung, der mittels Entschlüsselung, unter Verwendung des privaten Schlüssels (561), des von der Computervorrichtung oder -funktionalität (151) oder ihrer Software-Anwendung empfangenen verschlüsselten Identifikators (581') für eine virtuelle Vorrichtung erhalten wurde, gewährt.

10. Programm, umfassend einen computerlesbaren Programmcode, der, wenn er teilweise in einer Computervorrichtung oder -funktionalität (151) und teilweise in einer Zugriffsmanagement-Entität (500) ausgeführt wird, die Computervorrichtung oder -funktionalität (151) und die Zugriffsmanagement-Entität (500) veranlasst, ein Verfahren nach einem der Ansprüche 1 bis 7 durchzuführen.

11. Computerlesbares Medium, umfassend Instruktionen, die, wenn sie teilweise in einer Computervorrichtung oder -funktionalität (151) und teilweise in einer Zugriffsmanagement-Entität (500) ausgeführt werden, die Computervorrichtung oder -funktionalität (151) und die Zugriffsmanagement-Entität (500) veranlassen, ein Verfahren nach einem der Ansprüche 1 bis 7 durchzuführen.

## Revendications

1. Procédé permettant de réaliser une gestion de l'accès d'une pluralité de dispositifs informatiques ou de fonctionnalités (150) ou d'applications logicielles exécutées sur ceux-ci, au moyen d'une entité de gestion de l'accès (500) desservant en particulier une pluralité de groupes de personnes, dans lequel la gestion de l'accès de la pluralité de dispositifs informatiques ou de fonctionnalités (150) ou d'applications logicielles exécutées sur ceux-ci est liée à des données de santé d'une pluralité de personnes (100), dont chacune porte ou transporte un dispositif informatique ou une fonctionnalité de la pluralité de dispositifs informatiques ou de fonctionnalités, afin de fournir une traçabilité des contacts sur la base de la détection de rencontres pertinentes entre deux personnes de la pluralité de personnes (100),
dans lequel, en ce qui concerne la pluralité de dispositifs informatiques ou de fonctionnalités (150) ou d'applications logicielles exécutées sur ceux-ci, des identificateurs de dispositifs virtuels (580) sont utilisés, dans lequel un identificateur de dispositif virtuel (581) est lié à un dispositif informatique ou à une fonctionnalité (151) ou à son application logicielle, dans lequel l'entité de gestion de l'accès (500) est pourvue de la clé privée (561) d'une paire de clés comprenant la clé privée (561) et une clé publique correspondante (562),
dans lequel le procédé comprend les étapes suivantes afin que le dispositif informatique ou la fonctionnalité (151) ou son application logicielle soit au moins l'un parmi autorisé, authentifié, autorisé à accéder, et associé à un groupe, par l'entité de gestion de l'accès (500) :
- dans une première étape, l'entité de gestion de l'accès (500) génère l'identificateur de dispositif virtuel (581), le chiffre à l'aide de la clé publique (562) pour obtenir un identificateur de dispositif virtuel chiffré (581'), et transmet l'identificateur de dispositif virtuel chiffré (581') au dispositif informatique ou à la fonctionnalité (151) ou à son application logicielle,
- dans une seconde étape, lorsque le dispositif informatique ou la fonctionnalité (151) ou son application logicielle demande, à l'entité de gestion de l'accès (500), l'au moins un parmi l'authentification, l'autorisation, l'accès, et l'association à un groupe, le dispositif informatique ou la fonctionnalité (151) ou son application logicielle transmet l'identificateur de dispositif virtuel chiffré (581') à l'entité de gestion de l'accès (500) et l'entité de gestion de l'accès (500) accède à cette demande sur la base du contenu de l'identificateur de dispositif virtuel (581), obtenu au moyen du déchiffrage, à l'aide de la clé privée (561), de l'identificateur de dispositif virtuel chiffré (581') reçu à partir du dispositif informatique ou de la fonctionnalité (151) ou de son application logicielle.

2. Procédé selon la revendication 1, dans lequel, avant ou pendant la première étape, l'entité de gestion de l'accès (500) ou une autre entité de service (560) génère un jeton de transaction (565), dans lequel le jeton de transaction (565) est fourni ou transmis au dispositif informatique ou à la fonctionnalité (151) ou à son application logicielle, dans lequel, pendant la première étape, le dispositif informatique ou la fonctionnalité (151) ou son application logicielle transmet le jeton de transaction (565) à l'entité de gestion de l'accès (500) avant de recevoir l'identificateur de dispositif virtuel chiffré (581').

3. Procédé selon l'une des revendications précédentes, dans lequel le jeton de transaction (565) est en particulier un numéro de transaction, fourni ou transmis au dispositif informatique ou à la fonctionnalité (151) ou à son application logicielle au moyen d'un code lisible optiquement, en particulier un code QR.

4. Procédé selon l'une des revendications précédentes, dans lequel, dans la première étape, le chiffrement de l'identificateur de dispositif virtuel (581) est effectué, notamment dans le cas où la longueur de l'identificateur de dispositif virtuel (581) dépasse 32 octets, au moyen de l'utilisation d'un chiffrement hybride, notamment l'utilisation de la norme de chiffrement avancé 256 (Advanced Encryption Standard 256), et notamment au moyen de la génération d'une clé auxiliaire aléatoire, du chiffrement de l'identificateur de dispositif virtuel (581) à l'aide de la clé auxiliaire aléatoire en tant que première composante de l'identificateur de dispositif virtuel chiffré (581'), et du chiffrement de la clé auxiliaire aléatoire à l'aide de la clé publique (562) pour obtenir une seconde composante de l'identificateur de dispositif virtuel chiffré (581'),
dans lequel la clé privée (561) et la clé publique (562) sont liées ou correspondent au certificat de serveur de l'entité de gestion de l'accès (500).

5. Procédé selon l'une des revendications précédentes, dans lequel l'entité de gestion de l'accès (500) est la seule à pouvoir déchiffrer les identificateurs de dispositifs virtuels chiffrés (580), dans lequel, en particulier, une partie de la pluralité d'identificateurs de dispositifs virtuels (580) est ou peut être mise sur une liste noire par l'entité de gestion de l'accès (500), et/ou
dans lequel l'entité de gestion de l'accès (500) ne stocke que des identificateurs de dispositifs virtuels figurant sur la liste noire et, en particulier, n'a pas besoin de stocker les identificateurs de dispositifs virtuels, ni leur texte en clair ni leur texte chiffré.

6. Procédé selon l'une des revendications précédentes, dans lequel les identificateurs de dispositifs virtuels (580) comprennent au moins l'un parmi :
- une partie identification de groupe,
- un nombre aléatoire,
- une partie date de début de validité,
- une partie date d'expiration de partie date de fin de validité,
- une partie indiquant le pays d'une personne,
- une partie indiquant un rôle d'utilisateur,
- une partie somme de contrôle.

7. Procédé selon l'une des revendications précédentes, dans lequel les identificateurs de dispositifs virtuels (580) utilisés ont le même format ou la même structure, quel que soit le groupe spécifique concerné parmi les groupes de personnes, dans lequel, en particulier, les groupes de personnes sont des groupes de personnes séparés ou disjoints, les groupes faisant référence en particulier à différents locataires de l'entité de gestion de l'accès (500) de manière à fournir une gestion de l'accès multilocataire,
dans lequel, notamment au moyen de l'utilisation des identificateurs de dispositifs virtuels (580), les dispositifs informatiques ou les fonctionnalités (150) ou les applications logicielles exécutées sur ceux-ci peuvent être identifiés de manière pseudonymisée.

8. Système permettant de réaliser une gestion de l'accès d'une pluralité de dispositifs informatiques ou de fonctionnalités (150) ou d'applications logicielles exécutées sur ceux-ci, au moyen d'une entité de gestion de l'accès (500) desservant en particulier une pluralité de groupes de personnes, dans lequel la gestion de l'accès de la pluralité de dispositifs informatiques ou de fonctionnalités (150) ou d'applications logicielles exécutées sur ceux-ci est liée à des données de santé d'une pluralité de personnes (100), dont chacune porte ou transporte un dispositif informatique ou une fonctionnalité de la pluralité de dispositifs informatiques ou de fonctionnalités, afin de fournir une traçabilité des contacts sur la base de la détection de rencontres pertinentes entre deux personnes de la pluralité de personnes (100),
le système comprenant la pluralité de dispositifs informatiques ou de fonctionnalités (150) ou d'applications logicielles exécutées sur ceux-ci et l'entité de gestion de l'accès (500),
dans lequel, en ce qui concerne la pluralité de dispositifs informatiques ou de fonctionnalités (150) ou d'applications logicielles exécutées sur ceux-ci, des identificateurs de dispositifs virtuels (580) sont utilisés, dans lequel un identificateur de dispositif virtuel (581) est lié à un dispositif informatique ou à une fonctionnalité (151) ou à son application logicielle, dans lequel l'entité de gestion de l'accès (500) est pourvue de la clé privée (561) d'une paire de clés comprenant la clé privée (561) et une clé publique correspondante (562),
dans lequel le système est configuré de manière à ce que, pour que le dispositif informatique ou la fonctionnalité (151) ou son application logicielle soit au moins l'un parmi autorisé, authentifié, autorisé à accéder, et associé à un groupe, par l'entité de gestion de l'accès (500) :
- l'entité de gestion de l'accès (500) génère l'identificateur de dispositif virtuel (581), le chiffre à l'aide de la clé publique (562) pour obtenir un identificateur de dispositif virtuel chiffré (581'), et transmet l'identificateur de dispositif virtuel chiffré (581') au dispositif informatique ou à la fonctionnalité (151) ou à son application logicielle,
- lorsque le dispositif informatique ou la fonctionnalité (151) ou son application logicielle demande, à l'entité de gestion de l'accès (500), l'au moins un parmi l'authentification, l'autorisation, l'accès, et l'association à un groupe, le dispositif informatique ou la fonctionnalité (151) ou son application logicielle transmet l'identificateur de dispositif virtuel chiffré (581') à l'entité de gestion de l'accès (500) et l'entité de gestion de l'accès (500) accède à cette demande sur la base du contenu de l'identificateur de dispositif virtuel (581), obtenu au moyen du déchiffrage, à l'aide de la clé privée (561), de l'identificateur de dispositif virtuel chiffré (581') reçu à partir du dispositif informatique ou de la fonctionnalité (151) ou de son application logicielle.

9. Entité de gestion de l'accès (500) permettant de réaliser une gestion de l'accès d'une pluralité de dispositifs informatiques ou de fonctionnalités (150) ou d'applications logicielles exécutées sur ceux-ci, l'entité de gestion de l'accès (500) desservant en particulier une pluralité de groupes de personnes, dans lequel la gestion de l'accès de la pluralité de dispositifs informatiques ou de fonctionnalités (150) ou d'applications logicielles exécutées sur ceux-ci est liée à des données de santé d'une pluralité de personnes (100), dont chacune porte ou transporte un dispositif informatique ou une fonctionnalité de la pluralité de dispositifs informatiques ou de fonctionnalités, afin de fournir une traçabilité des contacts sur la base de la détection de rencontres pertinentes entre deux personnes de la pluralité de personnes (100),
dans lequel, en ce qui concerne la pluralité de dispositifs informatiques ou de fonctionnalités (150) ou d'applications logicielles exécutées sur ceux-ci, des identificateurs de dispositifs virtuels (580) sont utilisés, dans lequel un identificateur de dispositif virtuel (581) est lié à un dispositif informatique ou à une fonctionnalité (151) ou à son application logicielle, dans lequel l'entité de gestion de l'accès (500) est pourvue de la clé privée (561) d'une paire de clés comprenant la clé privée (561) et une clé publique correspondante (562),
dans lequel l'entité de gestion de l'accès (500) est configurée de manière à ce que, pour que le dispositif informatique ou la fonctionnalité (151) ou son application logicielle soit au moins l'un parmi autorisé, authentifié, autorisé à accéder, et associé à un groupe, par l'entité de gestion de l'accès (500) :
- l'entité de gestion de l'accès (500) génère l'identificateur de dispositif virtuel (581), le chiffre à l'aide de la clé publique (562) pour obtenir un identificateur de dispositif virtuel chiffré (581'), et transmet l'identificateur de dispositif virtuel chiffré (581') au dispositif informatique ou à la fonctionnalité (151) ou à son application logicielle,
- l'entité de gestion de l'accès (500) reçoit, à partir du dispositif informatique ou de la fonctionnalité (151) ou de son application logicielle, une demande concernant l'au moins un parmi l'authentification, l'autorisation, l'accès, et l'association à un groupe, reçoit l'identificateur de dispositif virtuel chiffré (581'), et l'entité de gestion d'accès (500) accède à cette demande sur la base du contenu de l'identificateur de dispositif virtuel (581), obtenu au moyen du déchiffrage, à l'aide de la clé privée (561), de l'identificateur de dispositif virtuel chiffré (581') reçu à partir du dispositif informatique ou de la fonctionnalité (151) ou de son application logicielle.

10. Programme comprenant un code de programme lisible par ordinateur qui, lorsqu'il est exécuté en partie sur un dispositif informatique ou une fonctionnalité (151) et en partie sur une entité de gestion de l'accès (500), amène le dispositif informatique ou la fonctionnalité (151) et l'entité de gestion de l'accès (500) à effectuer un procédé selon l'une des revendications 1 à 7.

11. Support lisible par ordinateur comprenant des instructions qui, lorsqu'elles sont exécutées en partie sur un dispositif informatique ou une fonctionnalité (151) et en partie sur une entité de gestion de l'accès (500), amènent le dispositif informatique ou la fonctionnalité (151) et l'entité de gestion de l'accès (500) à effectuer un procédé selon l'une des revendications 1 à 7.
